# EUROPÄISCHE PATENTSCHRIFT

(11) **EP 2 246 612 B1**
(45) Veröffentlichungstag und Bekanntmachung des Hinweises auf die Patenterteilung: **04.11.2015**
(21) Anmeldenummer: 10161263.8
(22) Anmeldetag: 28.04.2010
(51) Int. Cl.: F21Y 101/02, F21W 131/103, F21V 8/00, F21S 8/08

(54) **LED-Leuchte**
LED lamp
Lampe à DEL

(30) Priorität: 29.04.2009 DE 202009006261 U
(43) Veröffentlichungstag der Anmeldung: 03.11.2010
(73) Patentinhaber: Zumtobel Lighting GmbH, 6850 Dornbirn (AT)
(72) Erfinder: Vasse, Stephane, 6890, Lustenau (AT)
(74) Vertreter: Thun, Clemens

(56) Entgegenhaltungen:
- EP-A2- 1 674 786
- EP-A2- 2 039 985
- WO-A1-01/40702
- WO-A2-2005/107420
- WO-A2-2007/146373
- DE-U1- 20 111 739
- DE-U1-202008 017 116
- US-A1- 2004 156 189
- US-A1- 2006 198 119
- US-A1- 2009 010 022

## Beschreibung

Die Erfindung betrifft eine LED-Leuchte (LED: Licht emittierende Diode), insbesondere eine Außenleuchte, sowie eine Straßenleuchte mit einer derartigen LED-Leuchte.

Mit LED-Leuchte wird eine Leuchte bezeichnet, deren Lichtquelle LEDs umfasst. Mit Außenleuchte wird eine Leuchte bezeichnet, die sich für einen Einsatz im Freien eignet. Es ist bekannt, als Lichtquelle einer Außenleuchte LEDs zu verwenden.

Bei einer Leuchte und so auch bei einer Außenleuchte besteht im Allgemeinen das Bedürfnis, Licht auf einen bestimmten Raumbereich zu verteilen. Hierfür ist der Einsatz von optischen Elementen, beispielsweise in Form von Reflektoren oder Linsen bekannt.

Grundsätzlich besteht bei einer Leuchte und insbesondere bei einer Außenleuchte das Erfordernis, die Leuchte so zu gestalten, dass Umwelteinflüsse, wie beispielsweise Staub oder Nässe, die Funktionsweise der Leuchte nicht beinträchtigen. Die Leuchte muss hierfür also insbesondere entsprechend abgedichtet sein.

Die WO 01/40702 A1, die DE 20 2008 017 116 U1 und die EP 2 039 985 A2 zeigen jeweils Leuchten bzw. LED-Leuchten mit verschiedenen Formen von optischen Elementen und Lichtleitelementen.

Der Erfindung liegt die Aufgabe zu Grunde, eine LED-Leuchte bzw. eine Straßenleuchte mit einer solchen LED-Leuchte anzugeben, die besonders gut vor Umwelteinflüssen geschützt ist.

Diese Aufgabe wird gemäß der Erfindung mit den in den unabhängigen Ansprüchen genannten Gegenständen gelöst. Besondere Ausführungsarten der Erfindung sind in den abhängigen Ansprüchen angegeben

Gemäß der Erfindung ist eine LED-Leuchte vorgesehen, die ein LED-Modul mit wenigstens einer LED aufweist, ein optisches Element zum Beeinflussen der Abgabe des von der wenigstens einen LED emittierten Lichts sowie ein Lichtleitelement zum Leiten des von der wenigstens einen LED emittierten Lichts zu dem optischen Element, wobei das Lichtleitelement mit dem LED-Modul einen Hohlraum umschließt. Dabei ist das optische Element integral in dem Lichtleitelement ausgebildet. Zusätzlich ist das optische Element als Sekundäroptik ausgebildet und die wenigstens eine LED des LED-Moduls weist ein weiteres optisches Element als Primäroptik auf, um das Licht auf die Sekundäroptik zu lenken. Außerdem ist das Lichtleitelement als Röhre, insbesondere als transparente Röhre, ausgebildet.

Dadurch, dass das optische Element integral in dem Lichtleitelement ausgebildet ist, kann auf eine separate Abdichtung des optischen Elements verzichtet werden. Somit ist eine besonders einfache und dabei gute Abdichtung des LED-Moduls und damit der LED-Leuchte insgesamt ermöglicht. Die LED-Leuchte ist somit besonders gut vor Umwelteinflüssen geschützt.

Das optische Element kann also beispielsweise Bestandteil des Lichtleitelements sein. Dabei kann das Lichtleitelement insgesamt beispielsweise aus einem Stück bestehen.

Der Hohlraum kann beispielsweise mit Luft gefüllt oder evakuiert sein.

Vorteilhaft bildet eine Grenzfläche des Lichtleitelements das optische Element. Die Grenzfläche ist dabei weiterhin vorteilhaft durch die Form und/oder die Oberflächenstruktur des Lichtleitelements gebildet.

Vorteilhaft ist eine Abstrahlebene des optischen Elements zu der Abstrahlrichtung des LED-Moduls orthogonal oder geneigt. Hierdurch lässt sich das Abstrahlverhalten der LED-Leuchte gezielt beeinflussen.

Vorteilhaft ist das LED-Modul an einem Ende des Lichtleitelements angeordnet und das optische Element an dem dem LED-Modul gegenüberliegenden Ende des Lichtleitelements ausgebildet. Hierdurch lässt sich ein optisch vorteilhaft wirkender Abstand zwischen dem LED-Modul und dem optischen Element bewirken.

Vorteilhaft ist das Lichtleitelement derart ausgebildet, dass es das vom LED-Modul emittierte Licht in dem Bereich zwischen LED-Modul und optischem Element totalreflektiert. Dies ermöglicht einen besonders guten Wirkungsgrad der LED-Leuchte.

Vorteilhaft weist die LED-Leuchte weiterhin eine Schnittstelle zum Verbinden der LED-Leuchte mit einer Halterung auf. Die Schnittstelle kann insbesondere zur Herstellung einer mechanischen und elektrischen Verbindung ausgebildet sein.

Vorteilhaft weist die LED-Leuchte ferner ein Kühlelement zum Kühlen des LED-Moduls auf.

Vorteilhaft weist das LED-Modul wenigstens zwei LEDs auf, die - gegebenenfalls mit der zugeordneten Primäroptik - Licht in unterschiedlichen Farben abstrahlen. Dadurch wird die Variabilität der möglichen Leuchteigenschaften der LED-Leuchte vergrößert.

Das LED-Modul weist vorteilhaft weiße LEDs, monochromatische LEDs oder eine Kombination der beiden auf.

Vorteilhaft sind das Lichtleitelement und das LED-Modul derart miteinander verbunden, dass der durch das Lichtleitelement begrenzte Raum wenigstens der IP-Schutzklasse IP65 entspricht.

Gemäß einem weiteren Aspekt der Erfindung ist eine Straßenleuchte vorgesehen, die eine erfindungsgemäße LED-Leuchte aufweist.

Die Straßenleuchte ist dabei vorteilhaft als Straßenlaterne oder als Wandleuchte ausgebildet.

Vorteilhaft weist die Straßenleuchte eine Halterung auf, wobei die LED-Leuchte mittels der Schnittstelle mit der Halterung mechanisch und elektrisch verbunden ist.

Die Erfindung wird im Folgenden anhand von Ausführungsbeispielen und mit Bezug auf die Zeichnungen näher erläutert. Es zeigen:
- Fig. 1: eine Skizze zu einem ersten Ausführungsbeispiel einer erfindungsgemäßen LED-Leuchte,
- Fig. 2: eine Skizze zu einer ersten erfindungsgemäßen Straßenleuchte,
- Fig. 3: eine Skizze zu einer zweiten erfindungsgemäßen Straßenleuchte,
- Fig. 4: eine Skizze zu einem ersten, mit einer erfindungsgemäßen Straßenleuchte erzeugten Lichtkegel,
- Fig. 5: eine Skizze zu einem zweiten Ausführungsbeispiel einer erfindungsgemäßen LED-Leuchte,
- Fig. 6: eine Skizze zu einer dritten erfindungsgemäßen Straßenleuchte,
- Fig. 7: eine Skizze zu einer vierten erfindungsgemäßen Straßenleuchte,
- Fig. 8: eine Skizze zu einer fünften erfindungsgemäßen Straßenleuchte,
- Fig. 9: eine Skizze zu einem zweiten, mit einer erfindungsgemäßen Straßenleuchte erzeugten Lichtkegel.

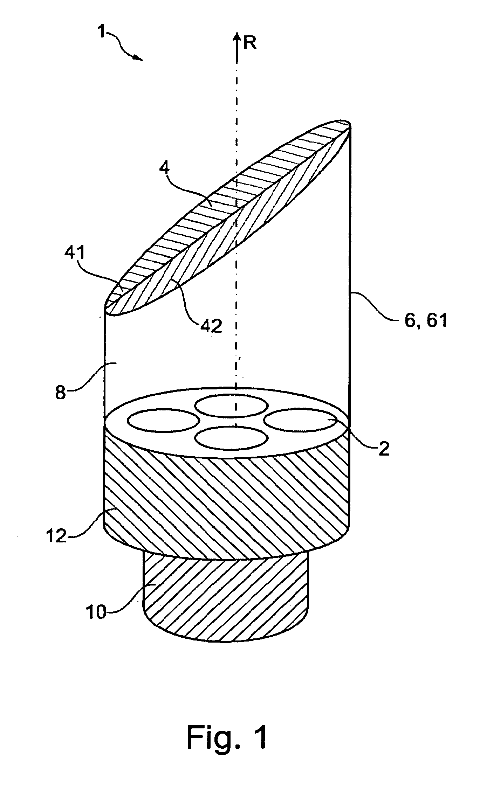

In Fig. 1 ist ein erstes Ausführungsbeispiel einer erfindungsgemäßen LED-Leuchte 1 skizziert. Die LED-Leuchte 1 weist als Lichtquelle ein LED-Modul 2 auf. Das LED-Modul 2 umfasst dabei wenigstens eine LED (beispielsweise als "die" oder "package"). Vorzugsweise umfasst das LED-Modul 2 mehrere LEDs.

Weiterhin weist die LED-Leuchte 1 ein optisches Element 4 auf, das zum Beeinflussen des Lichts dient, das von der wenigstens einen LED emittiert werden kann. Insbesondere kann das optische Element 4 dafür ausgebildet sein, die Richtung des Lichts, das von dem LED-Modul 2 ausgeht und auf das optische Element 4 trifft, gezielt zu verändern.

Das optische Element 4 kann beispielsweise wenigstens eine Linse und/oder wenigstens einen Reflektor aufweisen.

Weiterhin weist die LED-Leuchte 1 ein Lichtleitelement 6 auf. Das Lichtleitelement 6 dient zum Leiten des von der wenigstens einen LED emittierten Lichts zu dem optischen Element 4. Das Lichtleitelement 6 umschließt dabei mit dem LED-Modul 2 einen Hohlraum 8.

Das optische Element 4 ist integral in dem Lichtleitelement 6 ausgebildet. Das optische Element 4 kann also als Teil des Lichtleitelements 6 ausgebildet sein. Dabei kann das Lichtleitelement 6 insgesamt beispielsweise aus einem Stück bestehen. Hierdurch erübrigt sich eine Dichtung zwischen dem Lichtleitelement 6 und dem optischen Element 4.

Das Lichtleitelement 6 kann also als Abdeckung des LED-Moduls 2 ausgestaltet sein.

Das optische Element 4 kann durch eine Grenzfläche des Lichtleitelements 6 gebildet sein. Dabei kann die Grenzfläche durch die Form und/oder die Oberflächenstruktur des Lichtleitelements 6 gebildet sein. Die betreffende Oberfläche kann dabei beispielswiese gemustert strukturiert oder profiliert sein.

Beispielsweise kann - wie in Fig. 1 angedeutet - das optische Element 4 insgesamt wenigstens zwei zueinander geneigte, jeweils ebene Flächen 41, 42 aufweisen, durch die Licht, das von dem LED-Modul 2 stammt, hindurchtreten und im Weiteren die LED-Leuchte 1 verlassen kann.

Eine Abstrahlebene des optischen Elements 4, also beispielsweise eine durch die Fläche 41 oder die Fläche 42 festgelegte Ebene, kann zu der Abstrahlrichtung R des LED-Moduls 2 geneigt sein. Bei dem dargestellten Beispiel sind die beiden Ebenen, die durch die Flächen 41 und 42 des optischen Elements 4 festgelegt sind, bezüglich der Abstrahlrichtung R des LED-Moduls 2 geneigt. Mit Abstrahlrichtung R ist dabei jene Richtung bezeichnet, die senkrecht zu einer durch das LED-Modul 2 festgelegten Ebene verläuft und dabei in Abstrahlrichtung der wenigstens einen LED weist. Hierdurch wird ermöglicht, dass das von der LED-Leuchte 1 abgestrahlte Licht die Form eines insgesamt breiten Lichtkegels aufweist, so dass beispielsweise effektiv ein länglicher Straßenabschnitt beleuchtet werden kann.

Das Lichtleitelement 6 kann insgesamt länglich sein. Beispielsweise kann es dabei eine Hauptachse aufweisen, die parallel zu der Abstrahlrichtung R orientiert ist.

Das Lichtleitelement 6 kann eine Außenfläche 61 aufweisen, die eine zylindrische Form, beispielsweise eine kreiszylindrische Form festlegt. Das Lichtleitelement 6 kann in diesem Sinne einen "Rohrabschnitt" bilden, wobei an dem einen Ende - mit Bezug auf Fig. 1 an dem oberen Ende - des Rohrabschnitts das optische Element 4 ausgebildet ist, und zwar derart, dass es allseitig, ringförmig geschlossen, mit dem Rohrabschnitt verbunden ist. Das optische Element 4 erstreckt sich also in diesem Fall allseits bis zu der zylindrischen Außenfläche 61. An dem anderen Ende des Lichtleitelements 6 kann das LED-Modul 2 ausgebildet sein. Allgemeiner formuliert kann das LED-Modul 2 an einem Ende des Lichtleitelements 6 angeordnet sein und das optische Element 4 an dem dem LED-Modul 2 gegenüberliegenden Ende des Lichtleitelements 6 ausgebildet sein. Auf diese Weise lässt sich erzielen, dass einerseits das optische Element 4 von dem LED-Modul 2 so beabstandet ist, dass gute optische Eigenschaften erzielt werden können und andererseits eine insgesamt raumsparende und dichte Anordnung ermöglicht ist.

Energetisch vorteilhaft kann das optische Element 4 als Sekundäroptik ausgebildet sein, wobei die wenigstens eine LED des LED-Moduls 2 ein weiteres optisches Element als Primäroptik aufweist, um das Licht auf die Sekundäroptik zu lenken. Falls das LED-Modul 2 mehrere LEDs aufweist, können die LEDs jeweils ein weiteres optisches Element als Primäroptik aufweisen, um das Licht auf die Sekundäroptik zu lenken.

Energetisch vorteilhaft kann das Lichtleitelement 6 derart ausgebildet sein, dass es das von dem LED-Modul 2 emittierte Licht in dem Bereich zwischen dem LED-Modul 2 und dem optischen Element 4 totalreflektiert.

Insgesamt kann also vorgesehen sein, dass zwischen der Primäroptik der LEDs und der durch das optische Element 4 gebildeten Sekundäroptik ein optisch vorteilhaft wirkender Abstand gebildet ist, wobei die Sekundäroptik praktisch das gesamte von den LEDs abgegebene Licht aufnimmt und im Weiteren unmittelbar in einen Außenbereich der LED-Leuchte 1 abgibt.

Wie bereits erwähnt, kann das Lichtleitelement 6 als Rohrabschnitt oder kurz Röhre ausgebildet sein, insbesondere als transparente Röhre. Das Lichtleitelement 6 kann dabei das Gehäuse der LED-Leuchte bzw. einen Teil des Gehäuses der LED-Leuchte bilden.

Weiterhin kann die LED-Leuchte 1 vorteilhaft eine Schnittstelle 10 zum Verbinden der LED-Leuchte 1 mit einer Halterung aufweisen. Bei der Halterung kann es sich beispielsweise um einen Bereich eines Mastes oder einer Wand handeln. Beispielsweise kann die Schnittstelle ein Verbindungselement aufweisen, das zu einer formschlüssigen Verbindung mit der Halterung vorgesehen ist. Die Schnittstelle kann insbesondere zum mechanischen und elektrischen Anschluss der LED-Leuchte an der Halterung ausgebildet sein.

Weiterhin kann die LED-Leuchte 1 vorteilhaft ein Kühlelement 12 zum Kühlen des LED-Moduls 2 aufweisen. Beispielsweise kann das Kühlmodul 12 in raumsparender Weise unmittelbar angrenzend an das LED-Modul 2 angeordnet sein. Hierdurch wird ein besonders kompakter Aufbau der LED-Leuchte 1 ermöglicht. Wie in Fig. 1 angedeutet, kann dabei das Kühlelement 12 ebenfalls eine Außenfläche aufweisen, die in der Form eines Rohrabschnitts ausgebildet ist, so dass die Außenfläche 61 des Lichtleitelements 6 stufenlos in eine Außenfläche des Kühlmoduls 12 übergehen kann. Durch das Lichtleitelement 6 und das Kühlelement 12 kann also eine Außenfläche der LED-Leuchte 1 gebildet sein, die insgesamt eine Zylinderform definiert.

Die Schnittstelle 10 kann mit Bezug auf das Kühlelement 12 dem Lichtleitelement 6 gegenüberliegend angeordnet sein.

Mit Bezug auf das Licht, das von der LED-Leuchte 1 abgegeben werden kann ist es vorteilhaft, wenn das LED-Modul 2 wenigstens zwei, also insgesamt mehrere LEDs aufweist, die - gegebenenfalls mit der zugeordneten Primäroptik - Licht in unterschiedlichen Farben abstrahlen. Das LED-Modul 2 kann LEDs aufweisen, die weißes und/oder variabel weißes Licht abstrahlen können oder LEDs, die monochromatisches Licht abstrahlen können oder eine Kombination dieser Arten von LEDs.

Vorteilhaft sind das Lichtleitelement 6 und das LED-Modul 2 derart gestaltet und miteinander verbunden, dass der durch das Lichtleitelement 6 begrenzte Raum bzw. der von dem Lichtleitelement 6 und dem LED-Modul 2 eingeschlossene Hohlraum 8 so gut abgedichtet ist, dass ein Eindringen von Staub und/oder Nässe zuverlässig verhindert ist. Beispielsweise kann vorgesehen sein, dass diese Abdichtung so gut ist, dass die LED-Leuchte 1 wenigstens der IP-Schutzklasse IP65 entspricht.

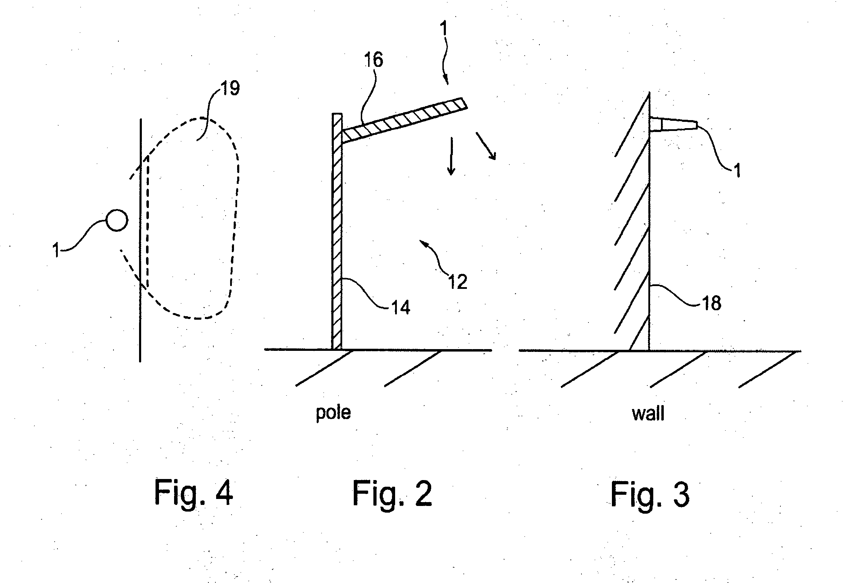

In Fig. 2 ist ein Ausführungsbeispiel einer erfindungsgemäßen Straßenleuchte 12 skizziert. Die Straßenleuchte 12 weist eine erfindungsgemäße LED-Leuchte 1 gemäß dem ersten Ausführungsbeispiel auf, wobei die LED-Leuchte 1 an einem Mast 14 der Straßenleuchte 12 angeordnet ist. Dabei kann die LED-Leuchte 1 über einen seitlich vom Mast 14 abstehenden Trägerarm 16 mit dem Mast 14 verbunden sein. Der Mast 14 kann eine Halterung aufweisen, wobei die LED-Leuchte 1 mittels der Schnittstelle 10 mit der Halterung mechanisch und elektrisch verbunden ist.

Da mit der LED-Leuchte 1, wie oben dargestellt, ein insgesamt länglicher Bereich beleuchtet werden kann, eignet sich eine solche Straßenleuchte beispielsweise zur Beleuchtung von Straßen, beispielsweise von Straßen im außerstädtischen Bereich.

In Fig. 3 ist eine Variante einer Straßenleuchte gezeigt, bei der die LED-Leuchte 1 an einer Wand 18 angeordnet ist. Zur Verbindung kann wiederum eine entsprechende Halterung an der Wand 18 angeordnet sein.

In Fig. 4 ist eine Aufsicht auf eine erfindungsgemäße Straßenleuchte gezeigt, wobei der Lichtkegel 19 skizziert ist, der mit der Straßenleuchte erzeugt werden kann.

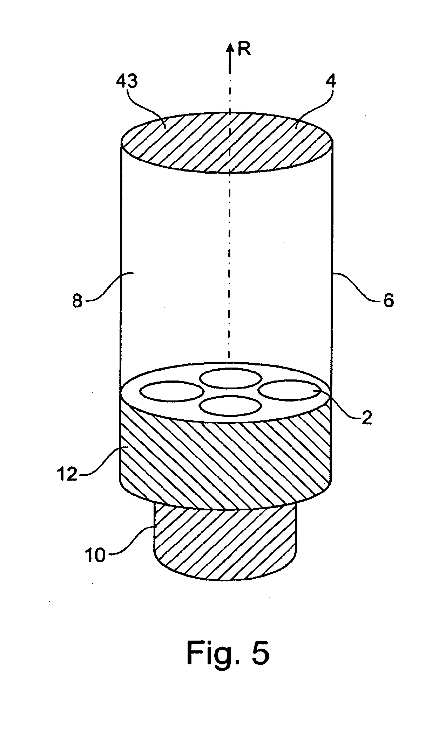

In Fig. 5 ist ein zweites Ausführungsbeispiel einer erfindungsgemäßen LED-Leuchte 1' skizziert. Die Bezugszeichen sind in analoger Weise zum ersten Ausführungsbeispiel verwendet. Soweit nicht anders angegeben, gelten die Ausführungen zum ersten Ausführungsbeispiel analog.

Das zweite Ausführungsbeispiel unterscheidet sich vom ersten Ausführungsbeispiel darin, dass das optische Element 4 eine Abstrahlebene festlegt, die mit Bezug auf die Abstrahlrichtung R des LED-Moduls 2 orthogonal orientiert ist. Das optische Element 4 kann in diesem Fall eine Abstrahlfläche 43 aufweisen, die die Abstrahlebene festlegt. Die Abstrahlfläche 43 kann beispielsweise kreisförmig sein.

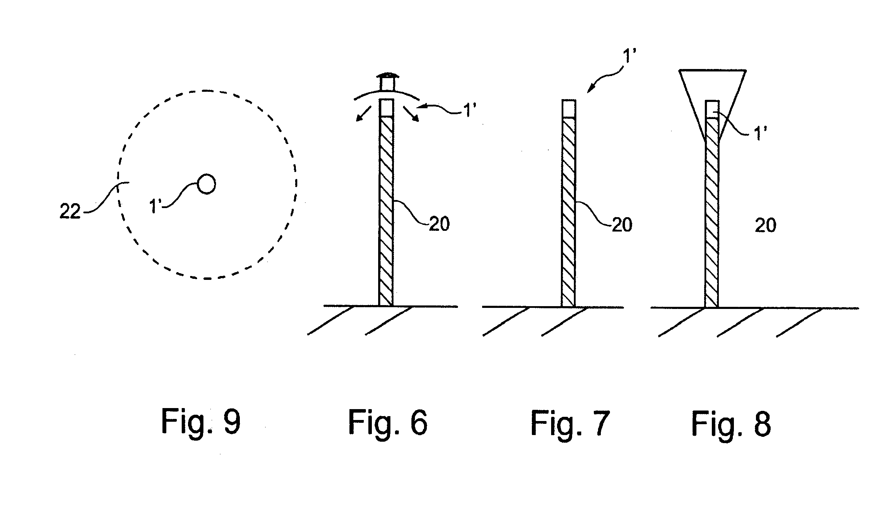

In den Figuren 6 bis 8 sind drei unterschiedliche Ausführungsbeispiele einer erfindungsgemäßen Straßenleuchte skizziert, die eine LED-Leuchte 1' gemäß dem zweiten Ausführungsbeispiel aufweist. Die LED-Leuchte 1' ist an einem Mast 20 der Straßenleuchte, vorzugsweise wiederum über eine entsprechende Halterung, angeordnet. Die obigen Ausführungen zu einer Straßenleuchte mit Bezug auf die Figuren 2 und 3 gelten analog. In Fig. 9 ist eine Aufsicht auf eine solche erfindungsgemäße Straßenleuchte gezeigt, wobei der Lichtkegel 22 skizziert ist, der mit der Straßenleuchte erzeugt werden kann. Eine erfindungsgemäße Straßenleuchte mit einer LED-Leuchte 1' gemäß dem zweiten Ausführungsbeispiel eignet sich für eine insgesamt kreiskegelförmige Lichtabgabe. Diese Form der Lichtabgabe eignet sich beispielweise für eine Straßen- oder Parkleuchte oder dergleichen im städtischen Bereich.

## Patentansprüche

1. LED-Leuchte, aufweisend:
- ein LED-Modul (2) mit wenigstens einer LED,
- ein optisches Element (4) zum Beeinflussen der Abgabe des von der wenigstens einen LED emittierten Lichts, und
- ein Lichtleitelement (6) zum Leiten des von der wenigstens einen LED emittierten Lichts zu dem optischen Element (4), wobei das Lichtleitelement (6) mit dem LED-Modul (2) einen Hohlraum (8) umschließt und das optische Element (4) integral in dem Lichtleitelement (6) ausgebildet ist,
**dadurch gekennzeichnet,**
**dass** das optische Element (4) als Sekundäroptik ausgebildet ist, und die wenigstens eine LED des LED-Moduls (2) ein weiteres optisches Element als Primäroptik aufweist, um das Licht auf die Sekundäroptik zu lenken und dass das Lichtleitelement (6) als Röhre, insbesondere als transparente Röhre, ausgebildet ist.

2. LED-Leuchte gemäß Anspruch 1, wobei eine Grenzfläche des Lichtleitelements (6) das optische Element (4) bildet.

3. LED-Leuchte gemäß Anspruch 2, wobei die Grenzfläche durch die Form und/oder die Oberflächenstruktur des Lichtleitelements (6) gebildet ist.

4. LED-Leuchte gemäß einem der vorhergehenden Ansprüche, wobei eine Abstrahlebene des optischen Elements (4) zu der Abstrahlrichtung (R) des LED-Moduls (2) orthogonal oder geneigt ist.

5. LED-Leuchte gemäß einem der vorhergehenden Ansprüche, wobei das LED-Modul (2) an einem Ende des Lichtleitelements (6) angeordnet ist und das optische Element (4) an dem dem LED-Modul (2) gegenüberliegenden Ende des Lichtleitelements (6) ausgebildet ist.

6. LED-Leuchte gemäß einem der vorhergehenden Ansprüche, wobei das Lichtleitelement (6) derart ausgebildet ist, dass es das vom LED-Modul (2) emittierte Licht in dem Bereich zwischen LED-Modul (2) und optischem Element (4) total reflektiert.

7. LED-Leuchte gemäß einem der vorhergehenden Ansprüche, ferner aufweisend eine Schnittstelle (10) zum Verbinden der LED-Leuchte mit einer Halterung.

8. LED-Leuchte gemäß einem der vorhergehenden Ansprüche, ferner aufweisend ein Kühlelement (12) zum Kühlen des LED-Moduls (2).

9. LED-Leuchte gemäß einem der vorhergehenden Ansprüche, wobei das LED-Modul (2) wenigstens zwei LEDs aufweist, die - gegebenenfalls mit der zugeordneten Primäroptik - Licht in unterschiedlichen Farben abstrahlen.

10. LED-Leuchte gemäß einem der vorhergehenden Ansprüche, wobei das LED-Modul (2) weiße LEDs, monochromatische LEDs oder eine Kombination der beiden aufweist.

11. LED-Leuchte gemäß einem der vorhergehenden Ansprüche, wobei der durch das Lichtleitelement (6) begrenzte Raum wenigstens der IP-Schutzklasse IP65 entspricht.

12. Straßenleuchte aufweisend eine LED-Leuchte gemäß einem der vorhergehenden Ansprüche, wobei die Straßenleuchte vorzugsweise als Straßenlaterne oder als Wandleuchte ausgebildet ist.

13. Straßenleuchte gemäß Anspruch 12, ferner aufweisend eine Halterung, wobei die LED-Leuchte mittels der Schnittstelle (10) mit der Halterung mechanisch und elektrisch verbunden ist.

## Claims

1. LED luminaire, comprising:
- an LED module (2) having at least one LED,
- an optical element (4) for influencing the output of the light emitted from the least one LED, and
- a light-guiding element (6) for directing the light emitted from the at least one LED to the optical element (4), wherein the light-guiding element (6) with the LED module (2) surrounds a cavity (8), while the optical element (4) is integrally formed in the light-guiding element (6), **characterised in that** the optical element (4) is formed as a secondary optics, and the at least one LED of the LED module (2) has a further optical element as the primary optics in order to direct the light onto the secondary optics, while the light-guiding element (6) is formed as a tube, in particular, a transparent tube.

2. LED luminaire according to claim 1, wherein an interface of the light-guiding element (6) forms the optical element (4).

3. LED luminaire according to claim 2, wherein the interface is formed by the shape and/or the surface structure of the light-guiding element (6).

4. LED luminaire according to one of the preceding claims, wherein an emission plane of the optical element (4) is perpendicular or inclined to the emission direction (R) of the LED module (2).

5. LED luminaire according to one of the preceding claims, wherein the LED module (2) is arranged at one end of the light-guiding element (6), while the optical element (4) is formed at the end of the light-guiding element (6) remote from the LED module (2).

6. LED luminaire according to one of the preceding claims, wherein the light-guiding element (6) is so designed that it totally reflects the light emitted from the LED module (2) in the area between the LED module (2) and the optical element (4).

7. LED luminaire according to one of the preceding claims, further comprising an interface (10) for connecting the LED luminaire with a bracket.

8. LED luminaire according to one of the preceding claims, further comprising a cooling element (12) for cooling the LED module (2).

9. LED luminaire according to one of the preceding claims, wherein the LED module (2) comprises at least two LEDs, which optionally emit light in different colours with the associated primary optics.

10. LED luminaire according to one of the preceding claims wherein the LED module (2) has white LEDs, monochromatic LEDs or a combination of both.

11. LED luminaire according to one of the preceding claims wherein the space limited by the light-guiding element (6) corresponds to at least IP65.

12. Street lamp comprising an LED lamp according to one of the preceding claims, wherein the lamp is preferably designed as a street lamp or wall lamp.

13. Street lamp of claim 12, further comprising a mount, wherein the LED lamp is connected mechanically and electrically by means of the interface (10) with the holder.

## Revendications

1. Luminaire LED comprenant :
- un module LED (2) avec au moins une LED,
- un élément optique (4) pour le contrôle de la distribution d'une lumière émise par l'au moins une LED et
- un élément conducteur de lumière (6) permettant de conduire la lumière émise par l'au moins une LED vers l'élément optique (4), l'élément conducteur de lumière (6) entourant, avec le module LED (2), un espace creux (8) et l'élément optique (4) étant intégralement disposé dans l'élément conducteur de lumière (6),
**caractérisé en ce que**
l'élément optique (4) est conçu comme une optique secondaire et l'au moins une LED du module LED (2) comprend un élément optique supplémentaire en tant qu'optique primaire, afin de dévier la lumière vers l'optique secondaire et **en ce que** l'élément conducteur de lumière (6) est conçu comme un tube, plus particulièrement comme un tube transparent.

2. Luminaire LED selon la revendication 1, une surface limite de l'élément conducteur de lumière (6) constituant l'élément optique (4).

3. Luminaire LED selon la revendication 2, la surface limite étant constituée par la forme et/ou la structure superficielle de l'élément conducteur de lumière (6).

4. Luminaire LED selon l'une des revendications précédentes, un plan d'émission de l'élément optique (4) étant orthogonal ou incliné par rapport à la direction d'émission (R) du module LED (2).

5. Luminaire LED selon l'une des revendications précédentes, le module LED (2) étant disposé à un » extrémité de l'élément conducteur de lumière (6) et l'élément optique (4) étant disposé à l'extrémité de l'élément conducteur de lumière (6) opposée au module LED (2).

6. Luminaire LED selon l'une des revendications précédentes, l'élément conducteur de lumière (6) étant conçu de façon à ce qu'il réfléchisse totalement la lumière émise par le module LED (2) dans la zone entre le module LED (2) et l'élément optique (4).

7. Luminaire LED selon l'une des revendications précédentes, comprenant en outre une interface (10) permettant de raccorder le luminaire LED avec un support.

8. Luminaire LED selon l'une des revendications précédentes, comprenant en outre un élément de refroidissement (12) pour le refroidissement du module LED (2).

9. Luminaire LED selon l'une des revendications précédentes, le module LED (2) comprenant au moins deux LED qui émettent, le cas échéant avec l'optique primaire correspondante, de la lumière de différentes couleurs.

10. Luminaire LED selon l'une des revendications précédentes, le module LED (2) comprenant des LED blanches, des LED monochromatiques ou une combinaison des deux.

11. Luminaire LED selon l'une des revendications précédentes, l'espace délimité par l'élément conducteur optique (6) présente au moins l'indice de protection IP 65.

12. Luminaire d'éclairage public comprenant un luminaire LED selon l'une des revendications précédentes, le luminaire d'éclairage public étant conçu de préférence comme un réverbère ou comme une applique murale.

13. Luminaire d'éclairage public selon la revendication 12, comprenant en outre un support, le luminaire LED étant relié, à l'aide de l'interface (10), au support de manière mécanique et électrique.
